# EUROPÄISCHE PATENTSCHRIFT

(11) **EP 1 236 558 B1**
(45) Veröffentlichungstag und Bekanntmachung des Hinweises auf die Patenterteilung: **21.01.2004**
(21) Anmeldenummer: 02003494.8
(22) Anmeldetag: 15.02.2002
(51) Int. Cl.: B29C 45/82, G05D 16/20

(54) **Verfahren zur Regelung der Druckmittelzufuhr zu einem hydraulisch betätigten Aktor**
Method for fluid supply regulation of an hydraulic actuator
Methode de régulation de l'alimentation en fluide d'un actionneur hydraulique

(30) Priorität: 03.03.2001 DE 10110398
(43) Veröffentlichungstag der Anmeldung: 04.09.2002
(73) Patentinhaber: Bosch Rexroth AG, 97816 Lohr am Main (DE)
(72) Erfinder: Breidenbach, Patrick, 97753 Karlstadt (DE); Hausen, Detlef, 63743 Aschaffenburg (DE); Köckemann, Albert, Dr., 97816 Lohr (DE); Liebler, Gerold, 97828 Marktheidenfeld (DE)

(56) Entgegenhaltungen:
- EP-A- 0 464 286
- EP-A- 0 587 043
- US-A- 5 486 106

## Beschreibung

Die Erfindung betrifft ein Verfahren zur Regelung der Druckmittelzufuhr zu einem hydraulisch betätigten Aktor einer zyklisch arbeitenden Fertigungsmaschine gemäß dem Oberbegriff des Anspruchs 1.

Aus der DE 43 35 403 C1 ist eine Spritzgießmaschine mit einem hydraulisch betätigten Aktor bekannt. Ein Elektromotor treibt eine Pumpe an, die dem Aktor hydraulisches Druckmittel entsprechend einem von einer übergeordneten Steuerung vorgegebenen Druck/Volumenstrom-Profil zuführt. Dabei lösen sich innerhalb eines Zyklus Bereiche, in denen eine Regelung des Volumenstroms erfolgt, mit Bereichen ab, in denen eine Druckregelung erfolgt. Um die Spritzgießmaschine energiesparend zu betreiben, ist sowohl eine Steuerung der Drehzahl des Elektromotors als auch eine Steuerung des Fördervolumens der Pumpe vorgesehen. Der Volumenstrom des von der Pumpe geförderten Druckmittels ergibt sich dabei multiplikativ aus der Drehzahl, mit der die Pumpe angetrieben wird, und dem Fördervolumen der Pumpe pro Umdrehung. Aufgrund dieses Zusammenhangs läßt sich ein gewünschter Volumenstrom durch eine Vielzahl von Wertepaaren von Drehzahl und Fördervolumen realisieren. Für Bereiche des Zyklus, in denen eine Volumenstromregelung erfolgt, lassen sich zwar aus dem von der übergeordneten Steuerung vorgegebenen Volumenstrom mit relativ geringem Aufwand geeignete Wertepaare für Drehzahl und Fördervolumen berechnen. Anders ist es in Bereichen des Zyklus, in denen die übergeordnete Steuerung den Druckverlauf vorgibt. In diesem Fall muß der Volumenstrom, der erforderlich ist, damit sich der vorgegebene Druckverlauf einstellt, aus der Geometrie des Aktors gesondert berechnet werden. Dabei sind zusätzlich das Kompressionsvolumen des Druckmittels und auch Leckverluste zu berücksichtigen. Dazu kommt noch der Einfluß von Druckänderungen während der Nachdruckphase des Spritzgießvorgangs, so daß die Berechnungen - sofern dabei überhaupt alle Einflußgrößen berücksichtigt werden können - sehr aufwendig werden und ungenau sind. Um beim Betrieb der Fertigungsmaschine auf der sicheren Seite zu liegen, d. h. damit auch bei nach längerer Betriebsdauer steigenden Leckölverlusten immer ein ausreichend großer Volumenstrom für die Versorgung des Aktors zur Verfügung steht, ist es erforderlich, die berechneten Drehzahlwerte um einen Sicherheitszuschlag zu erhöhen. Dieser Sicherheitszuschlag verringert aber wieder die durch die Steuerung der Drehzahl beabsichtigte Energieeinsparung.

Der Erfindung liegt die Aufgabe zugrunde, ein Verfahren der eingangs genannten Art zur Regelung der Druckmittelzufuhr zu einem hydraulisch betätigten Aktor einer zyklisch arbeitenden Fertigungsmaschine anzugeben, das in einfacher Weise eine Ermittlung der für den Betrieb der Fertigungsmaschine in den einzelnen Bereichen eines Zyklus jeweils erforderlichen Drehzahl des Elektromotors erlaubt.

Diese Aufgabe wird durch die im Anspruch 1 gekennzeichneten Merkmale gelöst. Da der für den Betrieb der Fertigungsmaschine erforderliche Drehzahlverlauf aus dem während des Betriebs gemessenen Leistungsbedarf der Fertigungsmaschine ermittelt wird, werden keine Angaben zu der Geometrie der einzelnen Aktoren benötigt. Der Einfluß der Kompressionsvolumina und der Leckölverluste werden dabei selbsttätig berücksichtigt. Da auf diese Weise auch die einer Berechnung nur sehr schwer zugänglichen Einflußgrößen mit erfaßt sind, ist es nicht erforderlich, zu ihrer Berücksichtigung einen zusätzlichen Sicherheitszuschlag zu dem ermittelten Drehzahlverlauf vorzusehen. Das erfindungsgemäße Verfahren vereinfacht somit wesentlich die Optimierung der Steuerung der Druckmittelzufuhr zu den Aktoren der Fertigungsmaschine. Die durch die Erfindung verbesserte Anpassung des Drehzahlverlaufs an den jeweiligen Leistungsbedarf wirkt sich auch vorteilhaft auf die Geräuschentwicklung der Fertigungsmaschine bei ihrem Betrieb aus. Nach längerer Betriebsdauer, wenn sich z. B. aufgrund von Abnutzungen mechanischer Teile von Aktoren Leckölverluste vergrößert haben, läßt sich auf einfache Weise eine Neuoptimierung des Drehzahl-Profils nach dem erfindungsgemäßen Verfahren durchführen. Dies gilt in gleicher Weise bei einem Austausch von Aktoren.

Vorteilhafte Weiterbildungen der Erfindung sind in den Unteransprüchen gekennzeichnet. Für die Verstellung des Fördervolumens der Verstellpumpe wird in vorteilhaftere Weise ein Pumpenregler vorgesehen, der unter Berücksichtigung der jeweiligen Drehzahl des Elektromotors das Fördervolumen der Verstellpumpe entsprechend dem von der übergeordneten Steuerung vorgegebenen Druck/Volumenstrom-Profil einstellt. Durch die Minimalwertauswahl zwischen dem Ausgangssignal eines Fördervolumenreglers und dem Ausgangssignal eines Druckreglers ist sichergestellt, daß die durch das Druck/Volumenstrom-Profil vorgegebenen Werte für den Druck und den Volumenstrom nicht überschritten werden. Die Regelung erfolgt derart, daß die eine Größe so geregelt wird, daß ihr Istwert gleich dem entsprechenden Sollwert ist, wobei der Istwert der jeweils anderen Größe kleiner als ihr Sollwert ist. Dabei werden Werte des Drehzahl-Profils, die größer als die theoretisch erforderlichen Werte sind, durch Veränderung des Fördervolumens der Verstellpumpe ausgeglichen. Der Einfluß des Drehzahl-Profils auf den Volumenstrom wird durch einen Faktor berücksichtigt, mit dem der Sollwert für den Volumenstrom multipliziert wird. Um das in der Motorsteuerung gespeicherte Drehzahl-Profil mit dem Druck/Förderstrom-Profil zu synchronisieren, wird der Motorsteuerung zu jedem Zyklusbeginn ein Zyklusstartsignal zugeführt. Die sowohl für die Drehzahl des Elektromotors als auch für das Fördervolumen vorgesehene Verstellmöglichkeit, erlaubt die Verwendung von Elektromotoren, bei denen die maximale Änderungsgeschwindigkeit der Drehzahl kleiner als die maximale Änderungsgeschwindigkeit des Fördervolumens der Verstellpumpe ist. Aufgrund der geringeren Anforderungen an die Dynamik der Steuerung der Drehzahl des Elektromotors lassen sich kostengünstige Antriebe einsetzen. Die kleinere Änderungsgeschwindigkeit der Drehzahl des Elektromotors wird in dem Drehzahl-Profil dadurch berücksichtigt, daß bei einer Erhöhung des Volumenstrombedarfs, der die Drehzahl des Elektromotors nur verzögert folgen kann, die Drehzahlerhöhung entsprechend früher beginnt. Bei Verringerungen des Volumenstrombedarfs, der.die Drehzahl des Elektromotors nicht direkt folgen kann, wird die Drehzahl entsprechend der Dynamik des Elektromotors langsamer verringert, bis die Drehzahl wieder ihren Sollwert erreicht hat. Damit die Schmierung der Verstellpumpe sichergestellt ist, darf ein Minimalwert der Drehzahl nicht unterschritten werden. Auch um eine ausreichende Kühlung des Elektromotors zu gewährleisten, darf ein Minimalwert der Drehzahl nicht unterschritten werden. Diese Forderungen werden durch eine entsprechende Korrektur des Drehzahl-Profils in Bereichen, in denen der Minimalwert der Drehzahl unterschritten würde, erfüllt. Damit der Elektromotor durch das für den Antrieb der Verstellpumpe benötigte Drehmoment nicht überlastet wird, ist eine druckabhängige Begrenzung des Drehzahl-Profils vorgesehen, die die Drehzahl soweit anhebt, daß das zulässige Drehmoment des Elektromotors nicht überschritten wird.

Die Erfindung wird im folgenden mit ihren weiteren Einzelheiten anhand eines in den Zeichnungen-dargestellten Ausführungsbeispiels näher erläutert. Es zeigen
- Figur 1: eine schematische Darstellung einer Einrichtung zur Durchführung des erfindungsgemäßen Verfahrens,
- Figur 2: den Aufbau des in der Figur 1 dargestellten Pumpenreglers in Form eines Blockschaltbilds,
- Figur 3: eine Darstellung des in der Motorsteuerung gespeicherten Drehzahl-Profils,
- Figur 4: eine Darstellung des in der Motorsteuerung gespeicherten Drehzahl-Profils, in der zusätzlich zu der Darstellung der Figur 3 die maximale Änderungsgeschwindigkeit der Drehzahl berücksichtigt ist, und
- Figur 5: eine Darstellung des in der Motorsteuerung gespeicherten Drehzahl-Profils, in der zusätzlich zu der Darstellung der Figur 4 ein Minimalwert für die Drehzahl berücksichtigt ist. ,

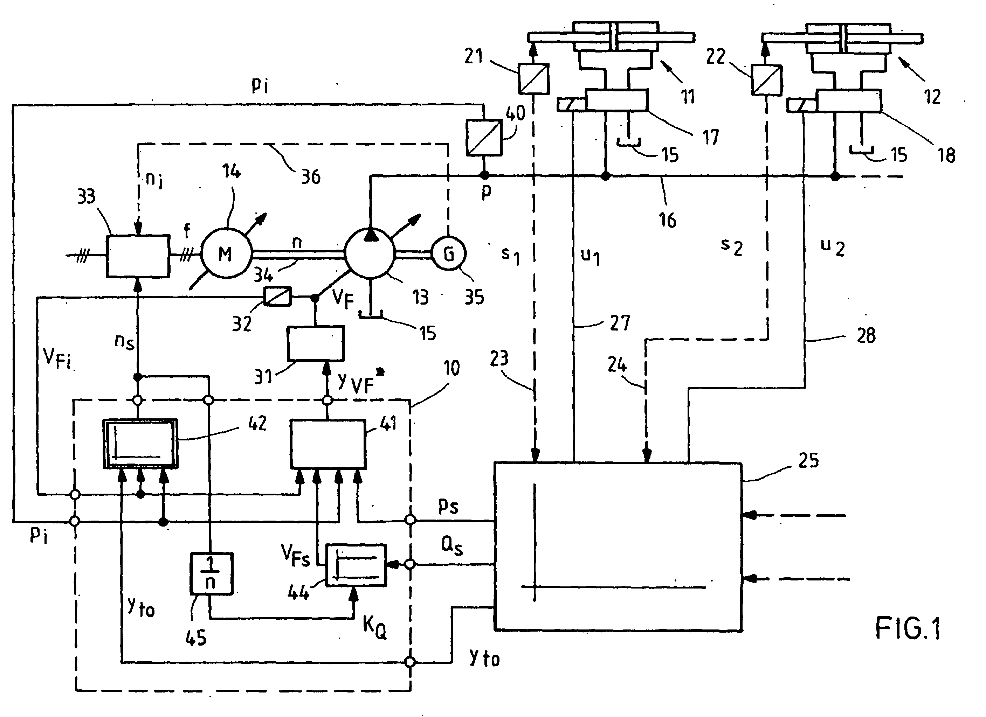

Die Figur 1 zeigt eine schematische Darstellung einer Einrichtung 10 zur Regelung der Zufuhr von hydraulischem Druckmittel zu zwei hydraulischen Aktoren einer zyklisch arbeitenden Fertigungsmaschine, z. B. einer Kunststoff verarbeitenden Spritzgießmaschine. Die Aktoren sind als Zylinder 11 und 12 ausgebildet. Eine Verstellpumpe 13, die von einem Elektromotor 14 angetrieben ist, fördert hydraulisches Druckmittel aus einem Tank 15 in eine Leitung 16. Zwischen der Leitung 16 und dem Aktor 11 ist ein erstes elektrisch angesteuertes Ventil 17 angeordnet, das den Volumenstrom von der Verstellpumpe 13 zu dem Zylinder 11 und von diesem zum Tank 15 steuert. Zwischen der Leitung 16 und dem Aktor 12 ist ein weiteres elektrisch angesteuertes Ventil 18 angeordnet, das den Volumenstrom von der Verstellpumpe 13 zu dem Zylinder 12 und von diesem zum Tank 15 steuert. Die Ventile 17 und 18 können als Schaltventil oder als Stetigventil ausgebildet sein. Bei Bedarf können zusätzlich zu den Zylindern 11 und 12 weitere Aktoren an die Leitung 16 angeschlossen werden. Ein erster Wegmeßumformer 21 setzt die Position der Kolbenstange des Zylinders 11 in ein elektrisches Signal s₁ um. In gleicher Weise setzt ein weiterer Wegmeßumformer 22 die Position der Kolbenstange des Zylinders 12 in ein elektrisches Signal S₂ um. Die Signale s₁ und s₂ sind über Leitungen 23 bzw. 24 einer übergeordneten Steuerung 25 zur weiteren Verarbeitung zugeführt, z. B. zur Positionsüberwachung oder als Istwerte von Lageregelkreisen: Die Leitungen 23 und 24 sind gestrichelt dargestellt, da sie - ebenso wie die Wegmeßumformer 21 und 22 - entfallen können, wenn die Position der Kolbenstangen der Zylinder 11 und 12 nicht benötigt wird. Die Ansteuerung der Ventile 17 und 18 erfolgt durch elektrische Signale u₁ bzw. u₂, die ihnen über Leitungen 27, 28 von der übergeordneten Steuerung 25 entsprechend einem in dieser gespeicherten Programm zugeführt werden. In der übergeordneten .Steuerung 25 ist weiterhin ein Druck/Volumenstrom-Profil P₍ₜ₎/Q₍ₜ₎ für die Druckmittelbeaufschlagung der Zylinder 11 und 12 während eines Fertigungszyklus gespeichert.

Der zur Regelung der Druckmittelzufuhr zu den Zylindern 11 und 12 dienenden Einrichtung 10 sind eine Reihe von Eingangssignalen zugeführt. Von der übergeordneten Steuerung 25 sind der Einrichtung 10 die jeweils aktuellen Werte des Sollwerts pₛ für den Druck und des Sollwerts Qₛ für den Volumenstrom gemäß dem in der übergeordneten Steuerung 25 gespeicherten Druck/Volumenstrom-Profil P₍ₜ₎/Q₍ₜ₎ zugeführt sowie ein Zyklusstartsignal yₜ₀, wenn ein neuer Zyklus beginnt. In vorteilhafter Weise handelt es sich hier um den Beginn des in der übergeordneten Steuerung 25 gespeicherten Druck/Volumenstrom-Profils p₍ₜ₎/Q₍ₜ₎, der aber nicht mit dem Start eines Fertigungszyklus übereinzustimmen braucht. Als weitere Eingangsgrößen sind der Einrichtung 10 der Istwert pᵢ des Drucks, der Istwert V_{Fi} des Fördervolumens der Verstellpumpe 13 und ein für die Drehzahl des Elektromotors 14 repräsentatives Signal nₛ. Die Einrichtung.10 gibt zwei Ausgangssignale y_{VF}* und nₛ ab. Das Ausgangssignal y_{VF}* ist einem Stellglied 31 zugeführt, das die Größe des Fördervolumens V_{F} der Verstellpumpe 13 steuert. Ein Meßumformer 32 liefert den Istwert des Fördervolumens V_{Fi} der Verstellpumpe 13. Das Ausgangssignal nₛ der Einrichtung 10 ist einem als Stellglied für die Drehzahl n des Elektromotors 14 dienenden Frequenzumrichter 33 zugeführt. Die mit f bezeichnete Ausgangsfrequenz des Frequenzumrichters 33 steuert die Drehzahl n des Elektromotors 14 zwischen einem Minimalwert nₘᵢₙ und einem Maximalwert nₘₐₓ. Dabei ist es vorteilhaft, die Nenndrehzahl des Elektromotors 14 als Maximalwert zu wählen. Der Elektromotor 14 ist über eine Welle 34 mit der Verstellpumpe 13 verbunden. Ein mit der welle 34 gekoppelter Tachogenerator 35 liefert den Istwert ni der Drehzahl n. Der Istwert ni der Drehzahl n kann entweder - wie in der Figur 1 durch eine gestrichelte Linie 36 dargestellt - dem Frequenzumformer 33 zur Regelung der Drehzahl n zugeführt werden. Es ist aber auch möglich, auf eine Regelung der Drehzahl n zu verzichten und stattdessen die Drehzahl n entsprechend dem Signal nₛ im offenen Kreis zu steuern. In diesem Fall ist der Tachogenerator 36 nicht erforderlich. Ein Druckmeßumformer 40, der mit der Leitung 16 verbunden ist, liefert den Istwert pᵢ des Drucks p.

Die Einrichtung 10 zur Regelung der Druckmittelzufuhr zu den Zylindern 11 und 12 enthält einen Pumpenregler 41, eine Motorsteuerung 42, einen als P-Glied 44 mit steuerbarem Verstärkungsfaktor K_{Q} dargestellten Multiplizierer und ein Rechenglied 45, dessen Ausgangssignal K_{Q} gleich dem Kehrwert seines Eingangssignals nₛ ist. Das P-Glied 44 bildet aus dem Sollwert Qₛ für den den Zylindern 11 und/oder 12 zuzuführenden Volumenstrom unter Berücksichtigung der Drehzahl n des Elektromotors 14 einen Sollwert V_{Fs} für das Fördervolumen der Verstellpumpe 13.

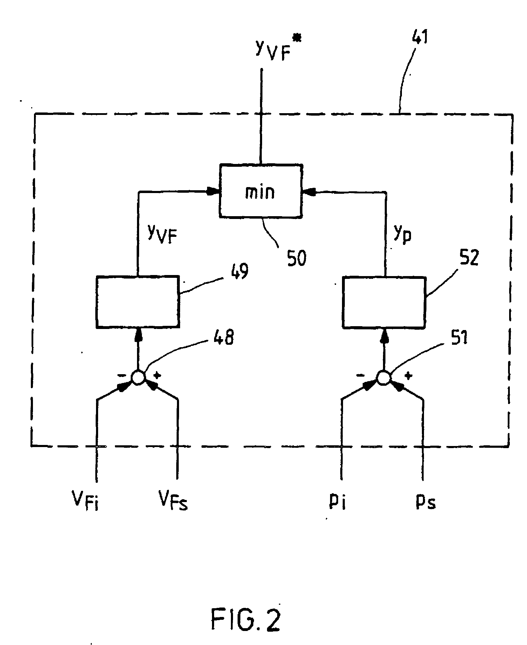

Einzelheiten des Pumpenreglers 41 sind im folgenden anhand der Figur 2 beschrieben. Die Figur 2 zeigt den Aufbau des Pumpenreglers 41 in Form eines Blockschaltbilds. Dem Pumpenregler 41 sind der Sollwert V_{Fs} für das Fördervolumen der Verstellpumpe 13 und sein Istwert V_{Fi} sowie der Sollwert pₛ für den Druck und sein Istwert pᵢ als Eingangssignale zugeführt. Das Ausgangssignal y_{VF}* des Pumpenreglers 41 ist dem Stellglied 31 als Stellgröße für das Fördervolumen V_{F} der Verstellpumpe 13 zugeführt. Ein erstes Summationsglied 48 bildet aus dem Sollwert V_{Fs} für das Fördervolumen und seinem Istwert V_{Fi} eine Regeldifferenz, die dem Fördervolumenregler 49 als Eingangssignal zugeführt ist. Das mit y_{VF} bezeichnete Ausgangssignal des Fördervolumenreglers 49 ist einem Minimalwertauswahlglied 50 als erstes Eingangssignal zugeführt. Ein zweites Summationsglied 51 bildet aus dem Sollwert Pₛ für den Druck und seinem Istwert Pᵢ eine Regeldifferenz, die einem Druckregler 52 als Eingangssignal zugeführt ist. Das mit yₚ bezeichnete Ausgangssignal des Druckreglers 52 ist dem Minimalwertauswahlglied 50 als weiteres Eingangssignal zugeführt. Das Minimalwertauswahlglied 50 wählt das kleinere der beiden Eingangssignale y_{VF} und yₚ aus und leitet es als Stellgröße y_{VF}* für das Fördervolumen V_{F} an das Stellglied 31 der Verstellpumpe 13 weiter. Sowohl die Regelung des Fördervolumens V_{F} als auch die Regelung des Drucks p erfolgen durch eine Verstellung des Fördervolumens der Verstellpumpe 13. Das Übertragungsverhalten des Förderstromreglers 49 und das des Druckreglers 52 weist einen Proportionalanteil und zusätzlich einen Differentialanteil auf. Bei dem Druckregler 52 ist der Differentialanteil aus Stabilitätsgründen erforderlich. Dagegen ist bei dem Fördervolumenregler 49 der Differentialanteil nicht unbedingt erforderlich, er verbessert jedoch das Regelverhalten des Fördervolumenreglers 49.

In der in der Figur 1 in Form eines Blocks dargestellten Motorsteuerung 42 sind der Drehzahlwert nₘₐₓ, ein zweiter Drehzahlwert nₘᵢₙ, das maximale Drehmoment M_{dmax} des Elektromotors 14 und das maximale Fördervolumen V_{Fmax} der Verstellpumpe 13 gespeichert. Weiterhin ist ein digitaler Speicher vorgesehen, in dem die Einzelwerte eines Drehzahl-Profils n₍ₜ₎, das den Verlauf der Drehzahl während eines Zyklus vorgibt, gespeichert. Der Motorsteuerung 42 sind das Zyklusstartsignal yₜ₀, der Istwert V_{Fi} des Fördervolumens sowie der Istwert pᵢ des Drucks als Eingangssignale zugeführt. Das Ausgangssignal nₛ der Motorsteuerung 42 ist dem Frequenzumrichter 33 und dem Rechenglied 45 als Eingangssignal zugeführt.

In der übergeordneten Steuerung 25 ist - wie bereits oben ausgeführt - das Druck/Volumenstrom-Profil p₍ₜ₎/Q₍ₜ₎ für die Druckmittelbeäufschlagung der Zylinder 11 und 12 während eines Fertigungszyklus gespeichert. Die Erfindung sieht vor, ein Drehzahl-Profil n₍ₜ₎ für den Elektromotor 14 zu erstellen, das den Verlauf der Drehzahl n während eines Fertigungszyklus vorgibt. Hierzu wird der Elektromotor 14 zunächst mit der konstanten Drehzahl nₘₐₓ betrieben. Die Regelung des den Zylindern 11 und 12 zugeführten Volumenstroms erfolgt dabei allein durch den Pumpenregler 41. Der Pumpenregler 41 sorgt dafür, daß die Verstellpumpe 13 den Zylindern 11 und 12 den Volumenstrom zuführt, der erforderlich ist, um die durch das Druck/Volumenstrom-Profil p₍ₜ₎/Q₍ₜ₎ vorgegebenen Werte einzuhalten. Dieser Volumenstrom ist im Folgenden auch als Volumenstrombedarf Q_{A} bezeichnet. Durch die Regelung von Druck p und Volumenstrom Q stellt sich ein von der Verstellpumpe 13 geförderter Volumenstrom ein, der sowohl das Kompressionsvolumen des Druckmittels als auch Leckverluste berücksichtigt, also Einflußgrößen, die einer Berechnung nur schwer zugänglich sind. Dies gilt in gleicher Weise für den Volumenstrombedarf der Zylinder 11 und 12 bei einer Druckregelung. Da sich der von der Verstellpumpe 13 geförderte Volumenstrom Q nach der Beziehung Q =nₘₐₓ • V_{F} aus der Drehzahl nₘₐₓ des Elektromotors 14 und dem Fördervolumen V_{F} der Verstellpumpe 13 ergibt, läßt sich der den Zylindern 11 und 12 zugeführte Volumenstrom direkt aus dem Istwert V_{Fi} des Fördervolumens unter Berücksichtigung der konstanten Drehzahl nₘₐₓ berechnen. Es ist vorteilhaft, als konstante Drehzahl nₘₐₓ die größte Drehzahl, mit der der Elektromotor 14 in den Fertigungszyklen betrieben werden soll, zu wählen. Bei dieser Drehzahl handelt es sich in der Regel um die Nenndrehzahl des Elektromotors 14.

Der Optimierurigsvorgang besteht aus einer Reihe von Lernzyklen, in denen die Verstellpumpe 13 mit der konstanten Drehzahl nₘₐₓ angetrieben wird. In einem ersten Lernzyklus wird die Dauer eines Fertigungszyklus durch Messung der Zeitdauer zwischen zwei Zyklusstartimpulsen ermittelt. Aus der Dauer eines Fertigungszyklus und der Anzahl der in der Motorsteuerung 42 für die Speicherung von Werten zur Verfügung stehenden Speicherplätze wird der zeitliche Abstand Δt für die Erfassung der zu speichernden Werte ermittelt. In einem weiteren Lernzyklus werden im Abstand von Δt die Istwerte V_{Fi} des Fördervolumens erfaßt und in der Motorsteuerung 42 gespeichert. Die dort gespeicherten Werte bilden ein Fördervolumen-Profil V_{Fl(t)}. In gleicher Weise werden die Istwerte pᵢ des Drucks erfaßt und in der Motorsteuerung 42 gespeichert. Die gespeicherten Werte bilden ein Druckprofil pᵢ₍ₜ₎. Durch Multiplikation der gespeicherten Einzelwerte des Fördervolumens mit der konstanten Drehzahl nₘₐₓ erhält man ein Volumenstrombedarf-Profil Q_{A(t)}. Um Speicherplatz einzusparen, kann nach dem Abschluß einer Multiplikation der gespeicherte Wert des Fördervolumens V_{Fl} durch den aus ihm berechneten Wert des Volumenstrombedarfs Q_{A} ersetzt werden. Durch Division des Volumenstrombedarfs Q_{A} durch einen konstanten Wert des Fördervolumens V_{F} erhält man ein Drehzahl-Profil n₍ₜ₎. Es empfiehlt sich, den konstanten Wert so zu wählen, daß er in der Nähe des Nennwerts des Fördervolumens V_{F} der Verstellpumpe 13 liegt. Damit eine Regelreserve zur Verfügung steht, wird der konstante Wert so gewählt, daß er ungefähr 90 % des Nennwerts des Fördervolumens V_{F} der Verstellpumpe 13 entspricht. Dieser Wert ist im folgenden mit V_{F90} bezeichnet. Um Speicherplatz einzusparen, kann nach dem Abschluß einer Division der gespeicherte Wert des Volumenstrombedarfs Q_{A} durch den aus ihm berechneten Drehzahlwert n ersetzt werden. Steuert man die Drehzahl des Elektromotors 14 gemäß dem auf diese Weise ermittelten Drehzahl-Profil n₍ₜ₎, würde sich unter idealen Bedingungen das Fördervolumen V_{F} der Verstellpumpe 13 auf den Wert V_{F90} einstellen. In der Praxis ist jedoch das Fördervolumen V_{F} der Verstellpumpe 13 während eines Zyklus nicht konstant, insbesondere da sich die Drehzahl n des Elektromotors 14 nicht so schnell ändern läßt wie das Fördervolumen V_{F} der Verstellpumpe 13. Dazu kommt, daß insbesondere im Hinblick auf die Schmierung der Verstellpumpe 13, der Kühlung des Elektromotors 14 und das maximal zulässige Drehmoment des Elektromotors 14 seine Drehzahl n nicht beliebig verringert werden darf.

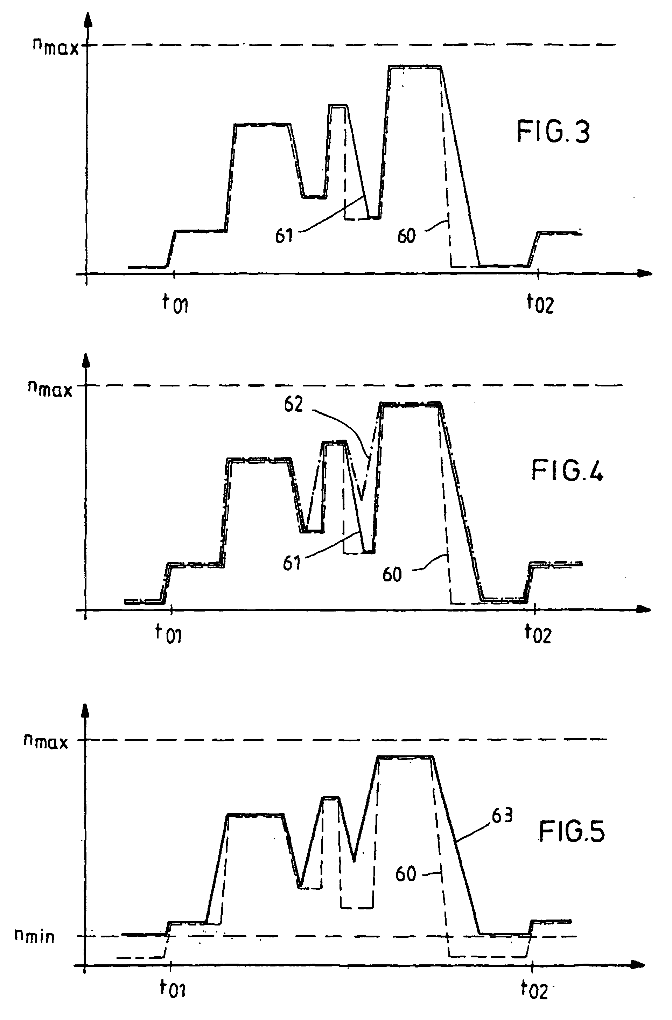

Die Figur 3 zeigt den zeitlichen Verlauf eines Drehzahl-Profils zwischen zwei Zyklusstartsignalen, die mit t₀₁ und t₀₂ bezeichnet sind. Das aus dem Volumenstrombedarf-Profil Q_{A(t)} ermittelte Drehzahl-Profil ist als gestrichelte Linie 60 dargestellt. Im Folgenden wird davon ausgegangen, daß die Drehzahl des Elektromotors 14 nicht so schnell geändert werden kann, wie es das Drehzahl-Profil 60 vorsieht. Um das Drehzahl-Profil 60 an die bauartbedingte maximal mögliche Änderungsgeschwindigkeit des Elektromotors 14 anzupassen, wird die Differenz von zwei aufeinanderfolgenden Drehzahlwerten ausgewertet. Dividiert man zwei aufeinanderfolgende Drehzahlwerte durch ihren zeitlichen Abstand Δt, erhält man die Änderungsgeschwindigkeit des Drehzahl-Profils an dieser Stelle des Zyklus. Dabei entspricht ein positiver Wert einer Beschleunigung und ein negativer Wert einer Verzögerung. In einem ersten Durchgang wird geprüft, ob die Differenz zwischen zwei aufeinanderfolgenden Drehzahlwerten negativ und ihr Betrag größer als ein Wert Δnₘₐₓ₋ ist, der der maximal möglichen Verzögerung des Elektromotors 14 entspricht. Ist bei negativem Vorzeichen der Differenz ihr Betrag größer als Δnₘₐₓ₋, wird der zweite der beiden Drehzahlwerte so geändert, daß er um Δnₘₐₓ₋ kleiner als der vorhergehende Drehzahlwert ist. Mit den jeweils folgenden Drehzahlwerten wird in der gleichen Weise verfahren, bis der Verlauf des ursprünglichen Drehzahl-Profils 60 wieder erreicht ist. Ist der Betrag der Differenz kleiner als Δnₘₐₓ₋, werden die jeweiligen Drehzahlwerte beibehalten. Der sich dabei ergebende Drehzahlverlauf ist als ausgezogene Linie 61 dargestellt.

Ausgehend von dem Drehzahlverlauf 61 werden in einem zweiten Durchgang die gespeicherten Drehzahlwerte in der entgegengesetzten Richtung verglichen, d. h. es wird - am Ende des Zyklus beginnend bis zurück zu seinem Anfang - jeweils die Differenz zwischen dem betrachteten Drehzahlwert und dem diesem vorhergehenden Drehzahlwert gebildet, wobei im nächsten Schritt der jetzt als "vorhergehender Drehzahlwert" berücksichtigte Drehzahlwert zum "betrachteten Drehzahlwert" wird. Dabei wird jeweils geprüft, ob die Differenz zwischen zwei benachbarten Drehzahlwerten negativ und ihr Betrag größer als ein Wert Δnₘₐₓ₊ ist, der der maximal möglichen Beschleunigung des Elektromotors 14 entspricht. Ist bei negativem Vorzeichen der Differenz ihr Betrag größer als Δnₘₐₓ₊, wird der zweite der beiden Drehzahlwerte so geändert, daß er um Δnₘₐₓ₊ kleiner als der betrachtete Drehzahlwert ist. Mit den jeweils folgenden Drehzahlwerten wird in gleicher Weise verfahren, bis der Verlauf des ursprünglichen Drehzahl-Profils.61 erreicht ist. Der sich dabei ergebende Drehzahlverlauf ist in der Figur 4 als dick ausgezogene Linie 62 dargestellt. Die Linie 62 gibt ein Mindestdrehzahl-Profil n*₍ₜ₎ wieder, das die maximal mögliche Änderungsgeschwindigkeit des Elektromotors 14 beim Beschleunigen und Verzögern berücksichtigt.

Um eine ausreichende Schmierung der Verstellpumpe 13 sowie eine ausreichende Kühlung des Elektromotors 14 sicherzustellen, darf ein Minimalwert nₘᵢₙ der Drehzahl nicht unterschritten werden. Dieser Drehzahlwert ist von der jeweils verwendeten Verstellpumpe 13 abhängig. Um diese Forderung zu berücksichtigen, werden in einem weiteren Durchgang die gespeicherten Drehzahlwerte mit dem Minimalwert nₘᵢₙ verglichen und der aktuelle Drehzahlwert durch den Minimalwert nₘᵢₙ ersetzt, wenn der aktuelle Drehzahlwert kleiner als der Minimalwert nₘᵢₙ ist. Der sich dabei ergebende Drehzahlverlauf ist in der Figur 5 zusammen mit dem Drehzahlverlauf 60 als ausgezogene Linie 63 dargestellt.

Elektromotoren dürfen nur kurzzeitig überlastet werden, ohne Schaden zu nehmen. Dabei gilt, daß die Überlastung desto größer sein darf, je kürzer sie auftritt. Eine Überlastung des Elektromotors 14 tritt zum Beispiel dann auf, wenn das zum Antrieb der Verstellpumpe 13 erforderliche Drehmoment, das durch das Produkt aus dem Druck p und dem Fördervolumen V_{F} bestimmt ist, größer als das im Folgenden mit M_{dzul} bezeichnete zulässige Drehmoment des Elektromotors 14 ist. Da nur in seltenen Fällen bei maximalem Fördervolumen der maximale Druck erzeugt werden muß, reicht es aus, einen Elektromotor zu verwenden, dessen Nenndrehmoment kleiner als das maximale Drehmoment der Verstellpumpe 13 ist. Um eine Beschädigung des Elektromotors zu vermeiden, ist vorgesehen, in einem Lernzyklus ein Druck-Profil p₍ₜ₎ erfassen. Hierzu ist der Motorsteuerung 42 der Istwert pᵢ des Drucks zugeführt. Aus dem zulässigen Drehmoment M_{dzul} des Elektromotors 14, der als Erfahrüngswert aus dem Nenndrehmoment des Elektromotors 14 bestimmt wird, und dem Druck-Profil p₍ₜ₎ wird nach der Beziehung V_{Fzul} = K₁ • (M_{dzul} / pᵢ) ein Profil für das maximal zulässige Fördervolumen V_{Fzul(t)} ermittelt. Mit K₁ ist dabei eine Konstante bezeichnet, die die Dimensionen der miteinander verknüpften Größen berücksichtigt. Aus dem Volumenstrombedarf-Profil Q_{A(t)} und dem Profil für das maximal zulässige Fördervolumen V_{Fzul (t)} wird dann nach der Beziehung n_{Md} = K₂ • (Q_{A} / V_{Fzul}) ein Profil für eine das zulässige Drehmoment M_{dzul} des Elektromotors 14 berücksichtigende minimale Drehzahl n_{Md(t)} ermittelt. Mit K₂ ist dabei eine Konstante bezeichnet, die die Dimensionen der miteinander verknüpften Größen berücksichtigt. In Abschnitten des Drehzahl-Profils, in denen die im Lernzyklus ermittelten Drehzahlwerte kleiner sind als die das zulässige Drehmoment M_{dzul} des Elektromotors 14 berücksichtigende minimale Drehzahl n_{Md(t)}, wird der dem Frequenzumrichter 33 zugeführte Sollwert nₛ für die Drehzahl so weit angehoben, daß er gleich der das zulässige Drehmoment M_{dzul} des Elektromotors 14 berücksichtigenden Drehzahl n_{Md(t)} ist. Damit läßt sich bei gleichem Volumenstrom das für den Antrieb der Verstellpumpe 13 erforderliche Drehmoment so weit verringern, daß das zulässige Drehmoment des Elektromotors 14 nicht unzulässig lange überschritten wird.

Nach der Ermittlung des Drehzahl-Profils n₍ₜ₎ wird das Ausgangssignal der Motorsteuerung 42 von konstanter Drehzahl nₘₐₓ auf eine variable Drehzahl entsprechend dem Drehzahl-Profil n₍ₜ₎ umgeschaltet. Das Zyklusstartsignal yₜ₀ synchronisiert das in der Motorsteuerung 42 gespeicherte Drehzahl-Profil n₍ₜ₎ mit dem in der übergeordneten Steuerung 25 gespeicherten Druck/Volumenstrom-Profil P₍ₜ₎/Q₍ₜ₎. Während der Fertigungszyklen erfolgt die Steuerung der Drehzahl des Elektromotors 14 durch das in der Motorsteuerung 42 gespeicherte Drehzahl-Profil n₍ₜ₎. Die Regelung von Druck und Volumenstrom erfolgt entsprechend dem in der übergeordneten Steuerung 25 gespeicherten Druck/Volumenstrom-Profil p₍ₜ₎/Q₍ₜ₎ durch den Pumpenregler 41. Dabei wird ausgehend vom dem Sollwert Qₛ für den Volumenstrom unter Berücksichtigung der Drehzahl des Elektromotors 14 ein Sollwert V_{Fs} für das Fördervolumen der Verstellpumpe 13 gebildet. Hierzu ist dem Rechenglied 45 ein Signal zugeführt, das ein Maß für die Drehzahl ist, mit dem die Verstellpumpe 13 angetrieben wird. Bei diesem Signal handelt es sich im einfachsten Fall um das dem Frequenzumformer 33 zugeführte Ausgangssignal nₛ der Motorsteuerung 42, wie in der Figur 1 dargestellt. Es ist aber auch möglich, bei einer Drehzahlerfassung dem Rechenglied 45 den Istwert ni der Drehzahl zuzuführen. Alternativ ist es auch möglich, durch ein Modell, das z. B. in dem Frequenzumformer 33 enthalten ist, aus dem Ausgangssignal nₛ der Motorsteuerung 42 ein dem Istwert ni der Drehzahl angenähertes Signal zu erzeugen und dieses dem Rechenglied 45 zuzuführen. Das Modell zur Erzeugung eines dem Istwert ni der Drehzahl angenäherten Signals kann aber auch in der Motorsteuerung 42 enthalten sein.

Da den Aktoren der Fertigungsmaschine schon während des Optimierungsvorgangs der Volumenstrom zugeführt wird, der durch das Druck/Volumenstrom-Profil der übergeordneten Steuerung vorgegeben ist, können bereits während des Optimierungsvorgangs Werkstücke von der Fertigungsmaschine hergestellt werden. Bis zu dem Zeitpunkt, zu dem das Drehzahl-Profil ermittelt ist, läuft der Elektromotor mit konstanter Drehzahl, und die Steuerung des Volumenstroms erfolgt nur durch die Änderung des Fördervolumens der Verstellpumpe. Nachdem das Drehzahl-Profil ermittelt worden ist, wird zusätzlich die Drehzahl des Elektromotors entsprechend dem Drehzahl-Profil gesteuert. Dabei erfolgt eine Verstellung des Fördervolumens der Verstellpumpe im wesentlichen dann, wenn kleinere Korrekturen oder schnelle Änderungen des dem Aktor zuzuführenden Volumenstroms erforderlich sind.

Das erfindungsgemäße Verfahren zur Regelung der Druckmittelzufuhr ist allgemein für Maschinen mit hydraulischen Aktoren geeignet, bei denen sich Arbeitsabläufe zyklisch wiederholen, z. B. bei Fertigungsmaschinen, wie Werkzeugmaschinen oder Kunststoffverarbeitungsmaschinen, z. B. Spritzgießmaschinen. Das erfindungsgemäße Verfahren ist besonders geeignet für Steuer- und Regeleinrichtungen mit digitaler Datenverarbeitung.

## Patentansprüche

1. Verfahren zur Regelung der Druckmittelzufuhr zu einem hydraulisch betätigten Aktor (11, 12) einer zyklisch arbeitenden Fertigungsmaschine, insbesondere einer Kunststoffverarbeitungsmaschine, bei der der Aktor (11, 12) von einer von einem drehzahlgesteuerten Elektromotor(14) angetriebenen Verstellpumpe (13) mit einer Druckmittelmenge versorgt wird, die durch ein von einer übergeordneten Steuerung (25) vorgegebenes Druck/Volumenstrom-Profil bestimmt ist, **dadurch gekennzeichnet,**
- **daß** in einem Lernzyklus bei konstanter Drehzahl (nₘₐₓ) des Elektromotors (14) ein Fördervolumen-Profil (V_{Fl(t)}) für die Verstellpumpe (13) erfaßt wird,
- **daß** aus der konstanten Drehzahl (nₘₐₓ) und dem Fördervolumen-Profil (V_{Fl(t)}) ein Volumenstrombedarf-Profil (Q_{A(t)}) ermittelt wird,
- **daß** aus dem Volumenstrombedarf-Profil (Q_{A(t)}) ein Drehzahl-Profil (n₍ₜ₎) bei konstantem Fördervolumen (V_{F90}) der Verstellpumpe (13) ermittelt wird,
- **daß** durch Verknüpfung des Druck/Volumenstrom-Profils (p₍ₜ₎/Q₍ₜ₎) mit dem Drehzahl-Profil (n₍ₜ₎) ein an das Drehzahl-Profil (n₍ₜ₎) angepaßtes Druck/Fördervolumen-Profil (p₍ₜ₎/V_{F(t)}) gebildet wird und
- **daß** in den Arbeitszyklen der Fertigungsmaschine der Elektromotor (14) entsprechend dem ermittelten Drehzahl-Profil (n₍ₜ₎) betrieben wird und die Verstellpumpe (13) entsprechend dem Druck/Fördervolumen-Profil (p₍ₜ₎/V_{F(t)}) angesteuert wird.

2. Verfahren zur Regelung der Druckmittelzufuhr nach Anspruch 1, **dadurch gekennzeichnet, daß** die Erfassung des Fördervolumens (V_{F}) während des Lernzyklus in festen Zeitabständen (Δt) erfolgt.

3. Verfahren zur Regelung der Druckmittelzufuhr nach Anspruch 1 oder Anspruch 2, **dadurch gekennzeichnet, daß** die während des Lernzyklus erfaßten Werte des Fördervolumens (V_{F}) gespeichert werden.

4. Verfahren zur Regelung der Druckmittelzufuhr nach einem der vorhergehenden Ansprüche, **dadurch gekennzeichnet, daß** ein das Fördervolumen (V_{F}) der Verstellpumpe (13) steuerndes Stellglied (31) mit dem Ausgangssignal (y_{VF}*) eines Pumpenreglers (41) beaufschlagt wird, dem der Sollwert (V_{Fs}) für das Fördervolumen der Verstellpumpe (13) und dessen Istwert (V_{Fi}) sowie der Sollwert (pₛ) für den Druck und dessen Istwert (pᵢ) zugeführt werden.

5. Verfahren zur Regelung der Druckmittelzufuhr nach Anspruch 4, **dadurch gekennzeichnet,**
- **daß** aus der Differenz zwischen dem Sollwert (V_{Fs}) für das Fördervolumen der Verstellpumpe (13) und dessen Istwert (V_{Fi}) eine erste Stellgröße (y_{VF}) für das das Fördervolumen (V_{F}) der Verstellpumpe (13) steuernde Stellglied (31) gebildet wird,
- **daß** aus der Differenz zwischen dem Sollwert (pₛ) für den Druck und dessen Istwert (pᵢ) eine zweite Stellgröße (yₚ) für das das Fördervolumen (V_{F}) der Verstellpumpe (13) steuernde Stellglied (31) gebildet wird und
- **daß** die kleinere der beiden Stellgrößen (y_{VF}, yₚ) dem das Fördervolumen (V_{F}) der Verstellpumpe (13) steuernden Stellglied (31) zugeführt wird.

6. Verfahren zur Regelung der Druckmittelzufuhr nach Anspruch 4 oder Anspruch 5, **dadurch gekennzeichnet, daß** der Sollwert (Qₛ) für den Volumenstrom mit einem zu dem Kehrwert der Drehzahl (n) des Elektromotors (14) proportionalen Faktor (K_{Q}) multipliziert wird und daß das Produkt dem Pumpenregler (41) als Sollwert (V_{Fs}) für das Fördervolumen der Verstellpumpe (13) zugeführt wird.

7. Verfahren zur Regelung der Druckmittelzufuhr nach einem der vorhergehenden Ansprüche, **dadurch gekennzeichnet, daß** ein die Drehzahl (n) des Elektromotors (14) steuerndes Stellglied (33) mit dem Ausgangssignal (nₛ) einer Motorsteuerung (42) beaufschlagt wird, in der das Drehzahl-Profil (n₍ₜ₎) eines Zyklus gespeichert ist, und daß der Motorsteuerung (42) von der übergeordneten Steuerung (25) beim Beginn eines neuen Zyklus ein Zyklusstartsignal (yₜ₀) zugeführt wird.

8. Verfahren zur Regelung der Druckmittelzufuhr nach einem der vorhergehenden Ansprüche, **dadurch gekennzeichnet, daß** aus dem Volumenstrombedarf-Profil (Q_{A(t)}) ein die maximal mögliche Änderungsgeschwindigkeit, (dn/dt) der Drehzahl (n) des Elektromotors (14) beim Beschleunigen und Verzögern berücksichtigendes Mindestdrehzahl-Profil (n*₍ₜ₎) ermittelt wird.

9. Verfahren zur Regelung der Druckmittelzufuhr nach Anspruch 8, **dadurch gekennzeichnet,** da**ß** in Abschnitten des Mindestdrehzahl-Profils (n*₍ₜ₎), in denen die Drehzahlwerte kleiner als ein für den Betrieb der Verstellpumpe (13) oder des Elektromotors (14) erforderlicher Minimalwert (nₘᵢₙ) sind, dem Elektromotor (14) der Minimalwert (nₘᵢₙ) als Drehzahl-Sollwert (nₛ) zugeführt wird. ,

10. Verfahren zur Regelung der Druckmittelzufuhr nach einem der vorhergehenden Ansprüche, **dadurch gekennzeichnet,**
- **daß** in einem Lernzyklus ein Druck-Profil (p₍ₜ₎) erfaßt wird,
- **daß** aus dem zulässigen Drehmoment (M_{dzul}) des Elektromotors (14) und dem Druck-Profil (p(t)) ein Profil für das maximal zulässige Fördervolumen (V_{Fzul(t)}) ermittelt wird,
- **daß** aus dem Volumenstrombedarf-Profil (Q_{A(t)}) und dem Profil für das maximal zulässige Fördervolumen (V_{Fzul(t)}) ein Profil für eine das zulässige Drehmoment (M_{dzul}) des Elektromotors (14) berücksichtigende minimale Drehzahl (n_{Md(t)}) ermittelt wird und
- **daß** in Abschnitten des Drehzahl-Profils (n(t); n*₍ₜ₎), in denen die Drehzahlwerte kleiner als die das zulässige Drehmoment (M_{dzul}) des Elektromotors (14) berücksichtigende minimale Drehzahl (n_{Md(t)}) sind, dem Elektromotor (14) die das zulässige Drehmoment (M_{dzul}) des Elektromotors (14) berücksichtigende minimale Drehzahl (n_{Md(t)}) als Drehzahl-Sollwert (nₛ) zugeführt sind.

## Claims

1. A method for control of the pressure medium supply to a hydraulically operated actuator (11, 12) of a cyclically operating production machine, in particular a plastics processing machine, whereby the actuator (11, 12) is supplied with a pressure fluid flow by a variable displacement pump (13) driven by a speed controlled electric motor (14), said pressure fluid flow being determined by a pressure/volumetric flow profile governed by a master control system (25), **characterized in that,**
- a delivery volume profile (V_{F1(t)}) for the variable displacement pump (13) is recorded in a learning cycle at constant speed (nₘₐₓ) of the electric motor (14),
- that a volumetric flow demand profile (Q_{A(t)}) is determined from the constant speed (nₘₐₓ) and the delivery volume profile (V_{F1(t)}),
- that a speed profile (n₍ₜ₎) at constant delivery volume (V_{F90}) of the variable displacement pump (13) is determined from the volumetric flow demand profile (Q_{A(t)}) ,
- that by combining the pressure/volumetric flow profile (p₍ₜ₎/Q₍ₜ₎) with the speed profile (n₍ₜ₎) a pressure/delivery volume profile (pₜ/V_{F(t)}) adapted to the speed profile (n₍ₜ₎) is generated, and
- that in the working cycles of the manufacturing machine the electric motor (14) is operated according to the determined speed profile (n₍ₜ₎) and the variable displacement pump (13) is driven according to the pressure/delivery volume profile (p₍ₜ₎/V_{F(t)}.

2. A method for controlling the pressure medium supply according to claim 1, **characterized in that** the recording of the delivery volume (V_{F}) during the learning cycle is performed at fixed time intervals (Δt).

3. A method for control of the pressure medium supply according to claim 1 or claim 2, **characterized in that** the values of the delivery volume (V_{F}) recorded during the learning cycle are stored.

4. A method for control of the pressure medium supply according to any of the preceding claims, **characterized in that** a command element (31) controlling the delivery volume (V_{F}) of the variable displacement pump (13) is subjected to the output signal (y_{VF*}) of a pump controller (41) to which are fed the set value (V_{Fs}) for the delivery volume of the variable displacement pump (13) and the actual value (V_{Fi}) thereof as well as the set value (pₛ) for the pressure and the actual value (pᵢ) thereof.

5. A method for control of the pressure medium supply according to claim 4, **characterized in that**
- a first command variable (y_{VF}) for the command element (31) controlling the delivery volume (V_{F}) of the variable displacement pump (13) is generated from the difference between the set value (V_{Fs}) for the delivery volume of the variable displacement pump (13) and its actual value (V_{Fi}),
- that a second command variable (yₚ) for the command element (31) controlling the delivery volume (V_{F}) of the variable-displacement pump (13) is generated from the difference between the set value (pₛ) for the pressure and its actual value (pᵢ), and
- that the smaller of the two command variables (y_{VF}, yₚ) is fed to the command element (31) controlling the delivery volume (V_{F}) of the variable displacement pump (13).

6. A method for control of the pressure medium supply according to claim 4 or claim 5, **characterized in that** the set value (Qₛ) for the volumetric flow is multiplied by a factor (K_{Q}) proportional to the inverse value of the speed (n) of the electric motor (14) and that the product is fed to the pump controller (41) as a set value (V_{Fs}) for the delivery volume of the variable displacement pump (13).

7. A method for control of the pressure medium supply according to any of the preceding claims, **characterized in that** a command element (33) controlling the speed (n) of the electric motor (14) is subjected to the output signal (nₛ) of a motor control system (42) in which the speed profile (n₍ₜ₎) of a cycle is stored and that the motor control system (42) is fed a cycle start signal (yₜ₀) by the master control system (25) at the start of a new cycle.

8. A method for control of the pressure medium supply according to any of the preceding claims, **characterized in that** a minimum speed profile (n*₍ₜ₎) taking account of the maximum possible rate of change (dn/dt) of the speed (n) of the electric motor (14) during acceleration and deceleration is determined from the volumetric flow demand profile (Q_{A(t)}) .

9. A method for control of the pressure medium supply according to claim 8, **characterized in that** in sections of the minimum speed profile (n*₍ₜ₎) in which the speed values are smaller than the minimum value (nₘᵢₙ) required for the operation of the variable displacement pump (13) or the electric motor (14) the minimum value (nₘᵢₙ) is fed to the electric motor (14) as speed set value (nₛ) .

10. A method for control of the pressure medium supply according to any of the preceding claims, **characterized in that**
- a pressure profile (p₍ₜ₎) is recorded in a learning cycle,
- that a profile for the maximum permissible delivery volume (V_{Fzul(t)}) is determined from the permissible torque (M_{dzul}) of the electric motor (14) and the pressure profile (p₍ₜ₎),
- that a profile for a minimum speed (n_{Md(t)}) taking account of the permissible torque (M_{dzul}) is determined from the volumetric flow demand profile (Q_{A(t)}) and the profile for the maximum permissible delivery volume (V_{Fzul(t)}), and
- that in sections of the speed profile (n(t); n*₍ₜ₎) in which the speed values are smaller than the minimum speed (n_{Md(t)}) taking account of the permissible torque (M_{dzul}) of the electric motor (14), the minimum speed (n_{Md(t)}) taking account of the permissible torque (M_{dzul}) of the electric motor (14) is fed to the electric motor (14) as the speed set value (nₛ).

## Revendications

1. Un processus pour la régulation de l'alimentation en fluide de pression d'un récepteur (11, 12) à actionnement hydraulique dans une machine de production travaillant de façon cyclique, en particulier d'une machine de transformation de matière synthétique, où une pompe (13) à cylindrée variable, qui est entraînée par un moteur (14) électrique à commande de la vitesse de rotation, alimente le récepteur (11, 12) en une quantité de fluide de pression déterminée par un profil de la pression par rapport au débit, lequel est donné en consigne par une commande (25) prioritaire, **caractérisé en ce**
- **qu'**un profil de volume (V_{Fl(t)}) refoulé par pompe (13) à cylindrée variable est saisi au cours d'un cycle d'apprentissage à vitesse (nₘₐₓ) de rotation constante du moteur (14) électrique,
- **qu'**un profil de débit (Q_{A(t)}) nécessaire est déterminé à partir de la vitesse (nₘₐₓ) de rotation constante et du profil de volume (V_{Fl(t)}) refoulé,
- **qu'**un profil de vitesse (n₍ₜ₎) de rotation pour un volume (V_{F90}) refoulé constant de la pompe (13) à cylindrée variable est déterminé à partir du profil de débit (Q_{A(t)} nécessaire,
- **que** la combinaison du profil de la pression par rapport au débit (p₍ₜ₎/Q₍ₜ₎) et du profil de vitesse (n₍ₜ₎) de rotation donne un profil de la pression par rapport au volume refoulé (p₍ₜ₎/V_{F(t)}) adapté au profil de vitesse (n₍ₜ₎) de rotation et
- **que**, pendant les cycles de travail de la machine de production, le moteur (14) électrique est actionné en fonction du profil de vitesse (n₍ₜ₎) de rotation obtenu et la pompe (13) à cylindrée variable est commandée en fonction du profil de la pression par rapport au volume refoulé (p₍ₜ₎/V_{F(t)}).

2. Un processus pour la régulation de l'alimentation en fluide de pression selon la revendication n° 1, **caractérisé en ce que** la saisie, pendant le cycle d'apprentissage, du volume (V_{F}) refoulé est effectuée à des intervalles de temps fixes (Δt).

3. Un processus pour la régulation de l'alimentation en fluide de pression selon la revendication n° 1 ou la revendication n° 2, **caractérisé en ce que** les valeurs du volume (V_{F}) refoulé saisies pendant le cycle d'apprentissage sont mises en mémoire.

4. Un processus pour la régulation de l'alimentation en fluide de pression selon une des revendications précédentes, **caractérisé en ce qu'**un élément (31) de commande, qui commande le volume (V_{F}) refoulé par la pompe (13) à cylindrée variable, est soumis au signal (y_{VF}*) de sortie d'un régulateur (41) de pompe, vers lequel sont ramenées la consigne (V_{Fs}) de volume refoulé par la pompe (13) à cylindrée variable et sa valeur (V_{Fi}) réelle, ainsi que la consigne (pₛ) de pression et sa valeur (pᵢ) réelle.

5. Un processus pour la régulation de l'alimentation en fluide de pression selon la revendication n° 4, **caractérisé en ce**
- **qu'**une première valeur (y_{VF}) de commande pour l'élément (31) de commande du volume (V_{F}) refoulé par la pompe (13) à cylindrée variable est formée à partir de la différence entre la consigne (V_{Fs}) de volume refoulé par la pompe (13) à cylindrée variable et sa valeur (V_{Fi}) réelle,
- **qu'**une seconde valeur (yₚ) de commande pour l'élément (31) de commande du volume (V_{F}) refoulé par la pompe (13) à cylindrée variable est formée à partir de la différence entre la consigne (pₛ) de pression et sa valeur (pᵢ) réelle et
- **que** l'inférieure des deux valeurs (y_{VF}, yₚ) de commande est ramenée vers l'élément (31) de commande du volume (V_{F}) refoulé par la pompe (13) à cylindrée variable.

6. Un processus pour la régulation de l'alimentation en fluide de pression selon la revendication n° 4 ou la revendication n° 5, **caractérisé en ce que** la valeur (Qₛ) de consigne du débit est multipliée par un coefficient (K_{Q}), qui est inversement proportionnel à la vitesse (n) de rotation du moteur (14) électrique, et que le produit est ramené comme consigne (V_{Fs}) de volume refoulé par la pompe (13) à cylindrée variable vers le régulateur (41) de pompe.

7. Un processus pour la régulation de l'alimentation en fluide de pression selon une des revendications précédentes, **caractérisé en ce qu'**un élément (33) de commande de la vitesse (n) de rotation du moteur (14) électrique est soumis au signal (nₛ) de sortie d'une commande (42) de moteur, où est mémorisé le profil de vitesse (n₍ₜ₎) de rotation d'un cycle, et que, au début d'un nouveau cycle, un signal (yₜ₀) de début de cycle est ramené vers la commande (42) de moteur par la commande (25) prioritaire.

8. Un processus pour la régulation de l'alimentation en fluide de pression selon une des revendications précédentes, **caractérisé en ce qu'**un profil de vitesse (n*₍ₜ₎) de rotation minimum est formé à partir du profil de débit (Q_{A(t)}) nécessaire, en tenant compte de la vitesse (dn/dt) maximum de variation de la vitesse (n) de rotation du moteur (14) électrique lors de l'accélération et du ralentissement.

9. Un processus pour la régulation de l'alimentation en fluide de pression selon la revendication n° 8, **caractérisé en ce que** dans des segments du profil de vitesse (n*₍ₜ₎) de rotation minimum, où les valeurs de vitesse de rotation sont inférieures à la valeur (nₘᵢₙ) minimum requise pour l'entraînement de la pompe (13) à cylindrée variable ou du moteur (14) électrique, la valeur (nₘᵢₙ) minimum est ramenée comme consigne (nₛ) de vitesse de rotation au moteur (14) électrique.

10. Un processus pour la régulation de l'alimentation en fluide de pression selon une des revendications précédentes, **caractérisé en ce**
- **qu'**un profil (p₍ₜ₎) de pression est saisi au cours d'un cycle d'apprentissage,
- **qu'**un profil (V_{Fzul(t)}) de débit de refoulement maximum autorisé est formé à partir du couple (M_{dzul}) de rotation du moteur (14) électrique autorisé et du profil (p₍ₜ₎) de pression,
- **qu'**un profil de vitesse (n_{Md(t)}) de rotation minimum, tenant compte du couple (M_{dzul}) de rotation autorisé du moteur (14) électrique, est formé à partir du profil de débit (Q_{A(t)}) nécessaire et du profil de débit (V_{Fzul(t)}) de refoulement maximum autorisé et
- **que** dans des segments du profil de vitesse (n₍ₜ₎; n*₍ₜ₎) de rotation, où les valeurs de vitesse de rotation sont inférieures à la vitesse (n_{Md(t)}) de rotation minimum tenant compte du couple (M_{dzul}) de rotation autorisé du moteur (14) électrique, la vitesse (n_{Md(t)}) de rotation minimum tenant compte du couple (M_{dzul}) de rotation autorisé du moteur (14) électrique est ramenée comme consigne (nₛ) de vitesse de rotation vers le moteur (14) électrique.
